(19) Europäisches Patentamt
European Patent Office
Office européen des brevets

(11) EP 0 424 833 B1

(12) **EUROPEAN PATENT SPECIFICATION**

(45) Date of publication and mention of the grant of the patent:
**03.01.1996 Bulletin 1996/01**

(51) Int Cl.$^6$: **C08J 5/04**, C08G 61/08

(21) Application number: **90120173.1**

(22) Date of filing: **20.10.1990**

(54) **Reinforcing fibers coated with methathesis catalysts**

Verstärkungsfasern beschichtet mit Methathese Katalysatoren

Fibres d'reenforcement couverts avec catalysateur d'methathesis

(84) Designated Contracting States:
**BE DE DK FR GB IT NL SE**

(30) Priority: **24.10.1989 US 426390**

(43) Date of publication of application:
**02.05.1991 Bulletin 1991/18**

(73) Proprietor: **THE B.F. GOODRICH COMPANY**
**Akron, Ohio 44313-1799 (US)**

(72) Inventors:
- **Goodall, Brian L.**
**Akron, Ohio 44313 (US)**
- **Standish, John V.**
**Cleveland, Ohio 44109 (US)**

(74) Representative:
**von Kreisler, Alek, Dipl.-Chem. et al**
**D-50462 Köln (DE)**

(56) References cited:
**EP-A- 0 107 079** **EP-A- 0 226 957**
**EP-A- 0 311 809** **US-A- 4 380 617**

- **Olefin Methathesis and Ring Opening Polymerisation, John Wiley, New York, 1985, pages 35 and 36.**

EP 0 424 833 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The prior art polymerization of a norbornene-type monomer in the presence of a metathesis catalyst system is characterized by ring opening of the monomer and formation of a polymer that can have pendant unsaturation in the cyclic structure. Physical properties can be further enhanced by using a catalyst component which further cleaves another cyclic structure in the polymer.

The prior art polymerizations are generally carried out in bulk in substantial absence of a solvent for the norbornene-type monomer or a mixture thereof. Such a process is referred to as reaction injection molding or RIM and results in a thermoset polymer which is polymerized in a mold and extracted therefrom in a short period of time such as one quarter of an hour, preferably less than one minute, depending on the size of the article extracted from the mold. Such a method is characterized by combining a plurality of reactant streams, one containing the catalyst of the metathesis catalyst system and a second containing the cocatalyst, and at least one stream containing a norbornene-type monomer or a mixture thereof; and then injecting the mixed streams into a mold where polymerization results in a tough, rigid thermoset polymer with high flexural modulus and excellent impact strength.

Reinforcing agents or fillers have been used in the past in making reinforced polynorbornene products. These are materials which can increase the polymer's flexural modulus with only a small sacrifice in impact resistance. Possible reinforcing agents and fillers include glass fibers, wollastonite, mica, carbon black, talc and calcium carbonate. The amount of such agents can vary up to 75%, based on the weight of the final product, preferably 1 to 40% by weight. The addition of reinforcing agents and fillers is also known to decrease shrinkage of the molded product.

There are differences between particulate fillers and reinforcing agents. Examples of fillers are calcium carbonate, talc, clays, carbon black, and the like whereas examples of reinforcing agents are minerals such as wollastonite and fibers such as aramid, graphite, polyethylene, vegetable, glass, and the like, especially glass. Fillers are normally used as bulking agents to reduce cost of the final product whereas reinforcing agents are used with the primary objective to improve physical properties of the final product. It is intended here to cover both. Product cost can also be reduced by using fillers and/or reinforcing agents in the final product. For purposes herein, the term "substrate" denotes both reinforcing agents and fillers.

In conducting the RIM polymerization discussed herein, the catalyst and cocatalyst are kept in separate tanks to prevent initiation of polymerization. Polymerization commences violently when catalyst and cocatalyst are brought together. By using modifiers with cocatalysts, a less violent polymerization at a more uniform rate can be carried out. Such modifiers include ethers, esters, ketones and nitriles.

There is another way to attenuate or lessen the action of the metathesis cocatalyst in order to carry out the polymerization. By introducing an alkoxy or aryloxy group into the alkyl aluminum halide cocatalyst, it is thus possible to diminish or reduce the reducing power thereof so that controlled polymerization can be conducted.

This invention pertains to a substrate having on its surface a coating selected from the group consisting of ring opening metathesis catalysts, ring opening metathesis cocatalysts, and mixtures thereof wherein said substrate is selected from the group consisting essentially of glass fibers, aramid fibers, graphite fibers, and mixtures thereof.

and to a process for making a reinforced polynorbornene product by introducing a substrate into a mold, the substrate material having thereon a metathesis catalyst component(s), introducing a monomer mixture into the mold, the monomer mixture containing at least one norbornene-type monomer, and if necessary, introducing the other metathesis catalyst component; allowing the norbornene monomer(s) to polymerize by ring opening to form a thermoset polynorbornene type product, and extracting the product from the mold.

The gist of this invention resides in applying a metathesis catalyst or cocatalyst component or a mixture thereof to a substrate. The catalyst and/or cocatalyst component is preferably insensitive to air and oxygen and can be applied to the substrate from an aqueous or an organic medium in which the component may or may not be soluble. The component can be applied to the substrate by itself or in another composition, such as a sizing solution. By the use of this invention, a molder can place a substrate coated with a catalyst or cocatalyst into a mold, introduce the monomer solution into the mold whereby the monomer solution would flow around the coated substrate, and extract a thermoset molded product from the mold. In this manner, the need for a separate monomer stream containing the catalyst or cocatalyst is obviated as well as the need to mix the catalyst stream with the cocatalyst stream before injecting the mixed streams into the mold.

The reinforcing or filler material, or substrate, may be glass, graphite, aramid fibers, wollastonite, mica, carbon black, talc, calcium carbonate or mixtures thereof. For example, the reinforcing material can be in the form of mats made of a continuous strand of glass fiber with a density of 457.7-610.3 $g/m^2$ (1.5-2.0 $oz/ft.^2$), such as random glass mat OCF 8608 or random glass mat OCF 8610 from Owens Corning Fiberglas Corporation. To obtain even greater reinforcement, mats of graphite fibers or Kevlar® aramid fibers can be used. Examples of these are mats of woven AS-4 or AS-6 graphite fibers of density 305.1-457.7 $g/m^2$ (1.0-1.5 $oz/ft^2$) from Hercules Incorporated.

Preferably, the mat is made up of fibrous material which is woven, intertwined or interlaced. Due to such weaving, intertwining or interlacing, the fibers of the mat are substantially interdependent in their response to forces applied to the mat. The mat can be made, for example, from chopped rovings by pulling vacuum while spraying chopped rovings

and a binder solution onto a shaped screen which can then be passed through a heated tunnel or oven to set the polymeric binder on the chopped rovings. Other types of mats include woven roving, random mats, needled mats, and preformed shapes made by such processes.

The fiber mats can be made from long fibers or from short fibers. Long or continuous fibers are generally considered to be 5.08 cm (2 inches) in length and longer whereas short fibers are generally considered to be about 5.08 cm (2 inches) and shorter. Continuous glass fiber mats are known which are 2.79 m (110 inches) wide and are made from chopped strands 5.08 cm (2 inches) long.

Therefore, in accordance with the invention disclosed herein, a glass fiber mat can be dipped in a solution or dispersion of the catalyst and/or cocatalyst to obtain a glass fiber mat that is virtually indistinguishable from the original mat but containing sufficient level of the catalyst and/or cocatalyst thereon. The catalyst and/or cocatalyst can be solubilized in an organic solvent or dispersed in water or another medium in which it is soluble or insoluble. The solvent or medium is removed by drying before the mat is ready for use. The catalyst and/or cocatalyst level can be adjusted by varying concentration of the catalyst and/or cocatalyst in a medium, be it organic, inorganic or aqueous. The catalyst and/or cocatalyst level can also be adjusted by varying other process parameters, such as the dipping period which can be 1/4 of a minute or less.

The catalyst and/or cocatalyst can also be incorporated in a sizing for the substrate. Traditional sizings for glass are applied as water solutions or dispersions. Sizings are applied to substrate, such as glass fibers, because glass fibers are very fragile and need a sizing agent. Sizings often contain organosilane such as vinyl triethoxy silane or styryl triethoxy silane or methacryl triethoxy silane or gamma-aminopropyl triethoxy silane. When fiber mats are made, a binder is required to provide the mat with handling strength. These binders are typically a polyester powder which is sprayed onto the mat and then heated to melt the powder. After cooling, the powder binders based on polymers tack or bind the mat together. Alternately, latexes, such as acrylic latexes, and polyester emulsions, have been used.

The catalyst and/or cocatalyst and the binder can be included in a sizing formulation. Such sizings include a metathesis catalyst and/or cocatalyst, an organic silane to act as a coupling agent for the substrate, a lubricant to improve handling of the coated substrate, an antistatic agent to reduce the static electricity on the treated substrate, a film former to act as a binder for the substrate if a mat is to be prepared, and other optional ingredients to improve the substrate in whatever form it may be used.

To improve coupling of the metathesis catalysts and/or cocatalysts to the substrate, especially when the substrate contains glass, silica, or alumina, the catalysts and/or cocatalysts can be provided with at least one silyl moiety. Such modified catalysts, for example, can be selected from silyl organoammonium molybdates and tungstates and can have the following formula:

$$M_yO_z^- \; {}^+\underset{\displaystyle |\atop R_3}{N} - (CH_2)_x - Si(OR^1)_3$$

where x is l or larger, M is molybdenum (Mo) or tungsten (W), and y and z are chosen to give active molybdate or tungstate moiety. A specific example of such silyl catalysts is trimethoxysilyloctyltrimethylammonium molybdate, which has the following formula:

$$Mo_8O_{26}\,[\underset{\displaystyle |\atop (CH_3)_3}{N} - (CH_2)_8 - Si(OCH_3)_3]_4$$

The advantage of such silyl organoammonium molybdates and tungstates is that they can be used to support or affix the catalyst to a substrate, especially a substrate containing silica, glass, alumina, or the like. The silyl molybdates and tungstates can be synthesized in an alcohol or through a route in which the Si-OR groups are not hydrolyzed.

The catalyst and/or cocatalyst solution or dispersion, applied from a sizing formulation or otherwise, can also contain other components. Examples of such other components include elastomers, blowing agents, fillers, flame retardants, and the like.

The ring-opening metathesis catalyst system is composed of a metathesis catalyst component and a metathesis cocatalyst component, or catalyst and cocatalyst. The known ring-opening metathesis catalyst systems for use in bulk polymerization of norbornene-type compounds are acceptable herein. Examples of the catalysts include halides, oxyhalides, oxides and organic salts of tungsten, molybdenum, and tantalum. Specific examples of the catalysts include tungsten hexachloride, tungsten oxytetrachloride, tungsten oxide tridodecylammonium tungstate, methyltricaprylammonium tungstate, tri(tridecyl) ammonium tungstate, trioctylammonium tungstate, molybdenum pentachloride, molybdenum oxytrichloride, tridodecylammonium molybdate, methyltricaprylammonium molybdate, tri(tridecyl)ammonium molybdate, trioctylammonium molybdate, and tantalum pentachloride. It is preferred to use catalysts which are soluble in

one or a mixture of norbornene-type monomers. From this viewpoint, organoammonium molybdates and tungstates are used.

If the catalyst is a halide, it can be solubilized in one or a mixture of the norbornene-type monomers by pretreatment with an alcoholic or a phenolic compound. Furthermore, if necessary, complexing agents can be used in combination therewith. Examples of the complexing agents include benzonitrile, tetrahydrofuran, and other Lewis bases, acetyl acetone, and alkyl esters of acetoacetic acid. By doing this, pre-polymerization can be prevented.

The organoammonium molybdates and tungstates suitable herein as metathesis catalysts have the following structural formulas:

$$[R_4N]_{(2y-6x)}M_xO_y \qquad [R^1_3NH]_{(2y-6x)}M_xO_y$$

where M is molybdenum or tungsten; O represents oxygen; x and y represent the number of M and O atoms in the molecule based on the valence of +6 for molybdenum, +6 for tungsten, and -2 for oxygen; and R and $R^1$ radicals can be same or different and are selected from hydrogen, alkyl and alkylene groups of 1 to 20 carbon atoms, and cycloaliphatic groups each of 5 to 16 carbon atoms. These catalysts are insensitive to air and moisture.

Other metathesis catalysts suitable herein include organoarsonium and organophosphonium molybdates and tungstates. These catalysts are characterized by the following structural formulas:

$$[R_4Z]_{(2y-6x)}M_xO_y \qquad [R^1_3ZH]_{(2y-6x)}M_xO_y$$

where Z is the element arsenic or phosphorus; M is molybdenum or tungsten; O represents oxygen; x and y represent the number of M and O atoms in the molecule based on the valence of +6 for molybdenum, +6 for tungsten, and -2 for oxygen; and R and $R^1$ radicals can be same or different and are selected from hydrogen, alkyl and alkylene groups of 1 to 20 carbon atoms, and cycloaliphatic groups each of 5 to 16 carbon atoms. These catalysts are also insensitive to air and moisture.

Still other metathesis catalysts suitable herein include the organoammonium, organophosphonium and organoarsonium heteropolymolybdates and heteropolytungstates. These catalysts are also insensitive to air and moisture.

The metathesis catalyst for ring-opening polymerization of a norbornene-type monomer or a mixture thereof is used at a level of 0.05 to 1 weight part based on 100 weight parts of all norbornene-type monomers, preferably 0.1 to 0.7 weight part.

The cocatalysts or activators are selected from the organoaluminums such as trialkylaluminums, alkylaluminum hydrides, alkylaluminum halides, alkoxyalkylaluminum halides, aryloxyalkylaluminum halides, and metalloxyalkylaluminum halides; organic tin compounds; and organic lead compounds. The alkylaluminum halide cocatalysts initiate polymerization immediately upon mixing thereof with a metathesis catalyst. Initiation of polymerization can be delayed by using a modifier selected from esters, ethers, ketones, and nitriles, as is well known in the art, especially ethyl benzoate, butyl ether, or diethylene glycol dimethyl ether.

Preferred metathesis cocatalysts are selected from the alkoxyalkylaluminum halide and aryloxyalkylaluminum halide cocatalysts defined as follows:

$$(RO)_aR^1_bAlX_c$$

where R is selected from alkyl and phenyl radicals; $R^1$ is selected from alkyl radicals; x is a halogen; the sum of a, b and c is 3.0 and each one of these parameters defines the equivalents of the moieties in the cocatalyst. This group of preferred cocatalysts includes alkoxyalkylaluminum chlorides and iodides and phenoxyalkylaluminum chlorides and iodides, especially propoxyethylaluminum chloride and the sesquichloride. The alcohol can be added separately from the alkylaluminum halide cocatalyst and the alcohol reacts in situ to form the final cocatalyst. These cocatalysts are soluble in norbornene-type monomer or mixtures thereof and can have a variable pot life depending on the amount of alcohol or the alkoxy moiety used to moderate it. The more alcohol used the longer is the pot life of the system using the alkoxyalkylaluminum or phenoxyalkylaluminum halide cocatalysts.

Preferred metathesis cocatalysts also include metaloxyalkylaluminum halides defined as follows:

$$(R_nMO)_aR^1_bAlX_c$$

where M is a metal selected from tin, lead, and aluminum; R and $R^1$ are individually selected from organic groups, especially lower alkyl groups and phenyl groups, n is 2 or 3, depending on the metal; X is a halide; and the sum of a, b and c is 3.0, each parameter defining the equivalents of the moieties in the cocatalyst.

Also included in the preferred metathesis cocatalysts are the organic tin compounds selected from alkyltin cocatalysts of lower alkyl tetraalkyltins, such as tetrabutyltin, lower alkyl trialkyltin and triaryltin hydrides such as tributyltin hydride, triphenyltin hydride, trimethyltin hydride, triethyltin hydride, tripropyltin hydride, tetraethyltin and tetrabutyltin. Also preferred are the organic lead compounds selected from alkyllead cocatalysts such as tetraethylead. These cocatalysts are insensitive to air and moisture and can be handled in air without special precautions which are needed with

the alkoxy and aryloxy alkylaluminum halides and the other metathesis cocatalysts.

The metathesis cocatalysts that are air insensitive can be applied to the reinforcing material from an organic or aqueous medium or be included in a sizing composition. The resulting air and moisture stable reinforcing material, especially glass fibers, can be used in the manufacture of structural polymeric matrix composites where the polymer matrix is partly or wholly composed of polymerized norbornene-type monomer or a mixture thereof. Same or similar conclusions apply to reinforcing material coated with a metathesis catalyst.

There are metathesis catalyst and metathesis cocatalyst systems which can be combined at room or ambient temperature without reacting or causing initiation of polymerization. Such catalysts and cocatalysts can be applied to a substrate from organic or aqueous systems in predetermined amounts. Such treated substrate is then placed in a mold, a norbornene monomer or a mixture thereof is introduced into the mold around the substrate, and the temperature of the mold contents is increased to polymerize the monomer(s). This approach has limited application due to the need for special metathesis catalysts and metathesis cocatalysts which are inert to each other at room or ambient temperature but which initiate polymerization at an elevated temperature.

As noted above, suitable metathesis catalysts and cocatalysts can be applied to a substrate from an organic or an aqueous system. Suitable solvents for use in the organic systems include aliphatic and cycloaliphatic hydrocarbon solvents such as pentane, hexane, heptane, octane, cyclohexane, cyclohexene and cyclooctane; aromatic hydrocarbon solvents which are liquid or easily liquified such as benzene, toluene and naphthalene; and substituted hydrocarbons wherein the substituents are inert, such as dichloromethane, chloroform, chlorobenzene and dichlorobenzene. Aqueous systems devoid of flammable and volatile organic solvents offer benefits in certain commercial operations.

Whether applied from an organic or an aqueous system, the catalyst or cocatalyst deposits on the substrate and becomes insoluble or difficult to leach out in organic and other solvents. This approach requires that the molder introduce into a mold a monomer charge with a catalyst or cocatalyst over the treated substrate whereby the monomer charge in liquid form flows around the treated substrate to fill all voids and wet the substrate.

It is preferred to select cocatalysts which are soluble in the norbornene-type monomer and mixtures thereof and which are relatively insensitive to oxygen and moisture. Between 0.1 and 100 millimoles, preferably 0.2 to 50 millimoles, of the metal in the cocatalyst is used per mole of norbornene-type monomer or a mixture thereof.

The norbornene-type monomers or polycycloolefins that can be polymerized in accordance with the process described herein are characterized by the presence of at least one norbornene group, identified by formula I, that can be substituted or unsubstituted:

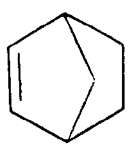

I

Pursuant to this definition, suitable norbornene-type monomers include polycycloolefins and in particular tricyclic and higher cyclic olefins selected from substituted and unsubstituted norbornenes, dicyclopentadienes, dihydrodicyclopentadienes, trimers of cyclopentadiene, and tetracyclododecenes. Examples of preferred monomers referred to herein include dicyclopentadiene, tetracyclododecene, methyltetracyclododecene, hexacycloheptadecene, methyl hexacycloheptadecene, 2-norbornene and other norbornene monomers such as ethylidenenorbornene, vinyl norbornene, 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene.

The invention especially contemplates preparation of homopolymers, copolymers and terpolymers of norbornene, methylnorbornene, vinyl norbornene, ethylidenenorbornene, dicyclopentadiene, tetracyclododecene, methyltetracyclododecene, hexacycloheptadecene, and methyl hexacycloheptadecene.

The monomer or a mixture of norbornene-type monomers can contain up to 20%, preferably 1 to 10%, by weight thereof of at least one other copolymerizable monomer. Such other copolymerizable monomers are preferably selected from mono- and dicycloolefins containing 4 to 12 carbon atoms, preferably 4 to 8 carbon atoms, examples of which include cyclobutene, cyclopentene, cyclopentadiene, cycloheptene, cyclooctene, 1,5-cyclooctadiene, cyclodecene, cyclododecene, cyclododecadiene, and cyclododecatriene.

In addition to the metathesis catalyst or cocatalyst in the monomer solution or an organic solvent solution or in an aqueous dispersion, in the preferred embodiment where a metathesis catalyst or cocatalyst is deposited on the substrate, a halogen source can be used in amount of 0.1 to 2 millimoles thereof per mole of the norbornene-type monomer(s).

Suitable halogen source herein is any halogen compound which can provide sufficient halogen for polymerization of one or more norbornene-type monomers in the presence of the metathesis catalyst system disclosed herein. Such halogen source is generally selected from non-aluminum metal halides where the metal is selected from tin, antimony, germanium and silicon. Depending on the valence of the metal, the compound suitable herein as a halogen source can contain a full complement of a halogen or it can contain a lesser number of halogen atoms in which case, the remaining valence or valences are satisfied by a group selected from hydrogen, alkyl and alkoxy groups containing 1 to 6 carbon

atoms, and phenyl and alkylphenyl groups containing 6 to 14 carbon atoms.

Examples of a suitable halogen source are chlorosilanes selected from dimethylmonochlorosilane, dimethyldichlorosilane, diphenyldichlorosilane and tetrachlorosilane. Tetrachlorosilane is particularly preferred.

In the monomer stream, other ingredients can be used such as elastomers, blowing agents, fillers, and flame retardants.

In the present invention, an elastomer may be used together with the catalyst or cocatalyst, but preferably with the cocatalyst. The elastomers which can be used are natural rubber, polybutadiene, styrene-butadiene copolymer, polyisoprene, styrene-butadiene-styrene block copolymer, styrene-isoprene-styrene block copolymer, ethylene-propylene-diene terpolymer, ethylene-vinyl acetate copolymer, and their hydrides. The elastomers may be used alone or as a mixture of two or more.

If a solution containing a monomer has low viscosity, the viscosity of such solution can be properly adjusted by dissolving elastomer therein.

The blending ratios of these elastomers are ordinarily 0.5-20 parts by weight, preferably 1-15 parts by weight, with respect to 100 parts by weight of the monomer charge. If the blending ratio of the elastomer is too low, the effect of rendering the impact resistance will be small. On the other hand, if it is too high, the viscosity of the solution will be too high and the molding operability will be poor.

The best mode now contemplated of carrying out this invention is exemplified by the following working examples of preferred specific embodiments. This invention is not limited to these specific examples. All percentages are by weight, based on the weight of monomer charge, unless otherwise clearly indicated.

## Example 1

### Preparation of Catalyst

In this catalyst preparation, ADOGEN® 340 (commercially available from the Sherex Corporation) was used. This material is a long chain fatty amine with a composition $NR_3$ where R comprises 5% $C_{14}H_{29}$, 30% $C_{16}H_{33}$ and 65% $C_{18}H_{37}$.

A. 10 grams ADOGEN® 340 was weighed into a 1000 ml round bottomed flask to which 100 ml methylene chloride was added to yield a colorless solution.

B. 13.22 grams ammonium molybdate $[(NH_4)_2MO_2O_7.4H_2O]$ was dissolved in 200 ml distilled water to yield a light blue solution.

C. 6.24 grams hydrochloric acid (37%) was diluted with 20 ml distilled water to yield a colorless solution.

D. With stirring, solution B was added to solution A, and thereafter, solution C was added to the resulting solution. On mixing, the methylene chloride layer became light yellow in color. This color intensified somewhat after refluxing for 1 hour. The methylene chloride layer was separated off, washed twice with distilled water and dried, whereby the catalyst $(R_3NH)_4Mo_8O_{26}$ was obtained (R as described above) as a yellow-brown waxy solid.

### Preparation of Coated Glass Fiber

Six grams of the above-described organoammonium molybdate was dissolved in 400 g methylene chloride in air. A section of commercially sized Owens Corning 8608 fiber glass weighing 30.41 g was dipped into this solution for 30 seconds and then allowed to air dry to constant weight. The final weight of the catalyst coated glass fiber mat was 30.70 g, indicating a catalyst loading of 0.29 g. The coated glass fiber mat was completely dry to the touch.

### Preparation of Cocatalyst Solution

To a 92.5/7.5 weight mixture of dicyclopentadiene (DCPD) and ethylidenenorbornene (ENB) (131.3 g) was added under nitrogen n-propanol in amount of 3.6 ml of a 1.0 molar solution in a DCPD/ENB mixture followed by diethylaluminum chloride (DEAC, 6 ml of a 0.5 molar solution in a DCPD/ENB mixture and silicon tetrachloride (6 ml of a 0.25 molar solution in a DCPD/ENB mixture).

### Polymerization

The section of catalyst-coated glass fiber mat was placed into a 22.86 cm x 15.24 cm x 0.32 cm (9″ x 6″ x 1/8 inch)

aluminum cavity mold. The mold was flushed with nitrogen and heated to 60°C. The cocatalyst solution was then introduced to fill the mold around the coated glass fiber mat. There was an immediate exotherm which peaked after 45 seconds at 143°C. After cooling, the mold was opened to reveal a hard, completely solidified glass fiber reinforced plaque weighing 97.20 g, approximately 31% by weight glass fiber.

Example 2

Preparation of Coated Glass Fiber

Three grams of tristridecylammonium molybdate ($[(C_{13}H_{27})_3NH]_4Mo_8O_{26}$) was dissolved in 200 g methylene chloride under air. A section of Owens Corning 8608 glass fiber mat weighting 41.0 g was dipped into this solution for 30 seconds and then allowed to air dry to constant weight. The final weight of the coated mat was 41.3 g, indicating that 0.3 g of the catalyst had been adsorbed onto the glass fiber mat. The mat was a very pale green in color and slightly tacky to the touch.

Preparation of Cocatalyst Solution

The cocatalyst component used was stored in a 18.9 l (5-gallon) "Firestone type" can under a pressure of 206.8 kPa (30 psi) nitrogen. The solution comprised 8323 g , 92.5/7.5 DCPD ENB mixture in which had been dissolved a commercially available Kraton® D-1102 elastomer in amount of 317 g. To this solution under nitrogen was added neat 44.65 g diethylaluminum chloride, 32.05 g of 2,4-dimethyl-3-pentanol in 288.5 g of 92.5/7.5 DCPD/ENB mixture, 3.46 g n-propanol in 31.1 g of 92.5/7.5 DCPD/ENB mixture, and 31.46 g neat $SiCl_4$.

Polymerization

The section of catalyst-coated glass fiber mat was placed into a 22.86 cm x 15.24 cm x 0.32 cm (9″ x 6″ x 1/8 inch) aluminum cavity mold. The mold was flushed with nitrogen and heated to 60°C. The cocatalyst solution was then introduced. There was an immediate exotherm which peaked after 45 seconds at about 150°C. After cooling, the mold was opened to reveal a hard, completely solidified glass fiber reinforced plaque weighing 123.8 g, approximately 33% by weight glass fiber.

Example 3

Preparation of Coated Glass Fiber

Four milliliters of tetra-n-butyltin was dissolved in 200 ml methylene chloride. A section of woven glass fiber roving was placed in an oven at 615°C and baked for 30 minutes after which it was cooled and weighed. The purpose of this baking procedure was to remove the sizing agents. The mat, weighting 58 g, was dipped into the above-described cocatalyst solution in air for approximately 30 seconds and allowed to air dry to a constant weight of 60.40 g indicating that the glass fiber mat had adsorbed 2.4 g of the tetrabutyltin cocatalyst.

Preparation of Catalyst Solution

To a 92.5/7.5 mixture of DCPD and ENB (160 g) under nitrogen was added 8 ml of silicon tetrachloride as a 0.25 molar solution in a DCPD/ENB mixture and tridodecylammonium molybdate ($[(C_{12}H_{25})_3NH]_4Mo_8O_{26}$) in amount of 4 ml of a 0.1 normal solution in 92.5/7.5 DCPD/ENB mixture.

Polymerization

The section of cocatalyst-coated glass fiber mat was placed into a 22.86 cm x 19.1 cm x 0.32 cm (9″ x 7 1/2″ x 1/8 inch) aluminum cavity mold. The mold was flushed with nitrogen and heated to 60°C. The catalyst solution was then introduced. There was an immediate exotherm which peaked after approximately 3 minutes at 172°C. After cooling, the mold was opened to reveal a hard, highly converted glass fiber reinforced plaque with no voids evident weighing 165.0 g, indicating a glass fiber loading of about 35%.

Example 4

Preparation of Coated Glass Fiber

Four milliliters of tetra-n-butyltin and 2.0 g tridodecylammonium molybdate were dissolved in 200 ml methylene chloride. A section of woven glass fiber roving was placed in an oven at 615°C and baked for 30 minutes after which it was cooled and weighed. The mat, weighing 55.5 g, was dipped into the above-described solution in air for approximately 45 seconds and allowed to air dry to a constant weight of 57.6 g indicating that 2.1 g of the catalyst and cocatalyst had been adsorbed onto the glass fiber.

Polymerization

Silicon tetrachloride in amount of 8 ml of a 0.25 molar solution in 92.5/7.5 DCPD/ENB mixture was added under nitrogen to 160 g of a DCPD/ENB 92.5/7.5 mixture. The above described coated glass fiber mat was placed into a 22.86 cm x 19.1 cm x 0.32 cm (9″ x 7 1/2″ x 1/8″) aluminum cavity to 60°C at which time the monomer $SiCl_4$ solution was added. On opening the mold, it was observed that polymerization had occurred but that conversion was not complete in the center of the plaque indicating that the catalyst/cocatalyst was not homogeneously dispersed throughout the mat. This problem can be overcome by using a longer dipping time or by using a more concentrated solution of the catalyst and cocatalyst.

Example 5

Catalyst Solution Preparation

A. 0.10 g $WCl_6$ was dissolved in 49 ml toluene under nitrogen.

B. 0.04 g p-tert-butylphenol was dissolved in 10 ml toluene.

C. Solutions or dispersions A and B were combined and purged with nitrogen for 2 hours to remove HCl liberated.

D. 0.028 ml of benzonitrile was added to C to prepare the catalyst solution.

Preparation of Cocatalyst Solution

One and one-half milliliters di-butyl ether was added to 129 ml DCPD to which had already been added 10.8 ml of a 0.5 molar solution of DEAC in a 92.5/7.5 DCPD/ENB solution.

Glass Fiber

50 g of commercially available silane-sized, chopped strand fiberglass was introduced into a clean, dry sample bottle which was placed in an oven at 140°C for 12 hours and then allowed to cool under nitrogen.

Preparation of Coated Glass Fiber

One half of the catalyst solution (D) was added to the test bottle containing the chopped glass strands and toluene was removed by evaporation to afford the glass coated with the catalyst.

Thirty two grams activator/monomer solution was injected under nitrogen into the test bottle containing glass strands coated with the catalyst. An immediate reaction followed as witnessed by a small exotherm. The bottle was placed in an oven at 105°C to drive the reaction to completion. After completion of the polymerization, the color of the catalyst had changed from red to brown and the polymer took the form of a hard mass in which the chopped glass fiber strands were firmly embedded.

Example 6

The remaining half of catalyst solution D described in Example 5 was added to a second test bottle containing a further 50 g of chopped glass strands and toluene was removed by evaporation. The contents of the bottle, which

contained glass fiber strands coated with catalyst were then exposed to air and moisture by opening the bottle and exposing the contents to the atmosphere for a period of 72 hours at ambient conditions. After this period, the color of the coated glass had changed from red to brown. The bottle was then restoppered and 32 g of the activator/monomer solution was added at ambient temperature after which the bottle was placed in an oven at 140°C for a total of 120 minutes. The greatest portion of the mass had solidified to afford a blue-colored mass but there was a little unconverted yellow liquid which formed a separate upper layer indicating that this particular catalyst system, in contrast to the air-stable halogen-free metallate systems exemplified in examples 1 to 4, exhibits a certain degree of air-sensitivity even when adsorbed on to a glass-fiber support.

Example 7

Aqueous Dispersion of Molybdate Catalyst

Two grams of tristridecylammonium molybdate was dissolved in 5 grams of methyl isobutyl ketone. Deionized water in amount of 100 g was added to form a dispersion of catalyst.

Preparation of Coated Mat

A piece of Owens Corning 8608 glass fiber mat (about 13 µm fiber thickness) was dipped into the above solution for about 15 seconds, removed, and then dried in an air oven at 150°C for 30 minutes. The initial mat was white in color. The coated mat was uniformly light yellow in color, demonstrating that the mat was coated with catalyst.

Polymerization

Two layers of the above mat were cut to fit into a 15.24 cm x 22.86 cm x 0.32 cm (6″ x 9″ x 1/8″) aluminum cavity mold which was heated to about 60°C. The mold was purged with nitrogen and then the cocatalyst activator solution of Example 2 was introduced into the mold. The reaction was monitored by observing the temperature of the reaction mass. After the reaction mass had cooled in the mold, a completely solidified fiber reinforced plaque was removed from the mold.

Example 8

Preparation of Catalyst and Film Former Sizing Dispersion

One gram of tristridecylammonium tungstate was mixed with 5 g toluene, 15 g isopropanol, and 5 g Ricon® 156 resin. Ricon® 156 resin is a poly(styrene-butadiene) resin supplied by Colorado Chemicals. Also, 100 g of deionized water was added with vigorous mixing to create a dispersion.

Preparation of Treated Fibers

A 55 g portion of the sizing dispersion prepared above was mixed with 30 g of water-sized chopped fibers supplied by Owens Corning Fiberglas. The fibers were then dried for one hour in an air oven at 150°C, and then over night at 50°C.

Polymerization

About 15 grams of treated fibers were placed in a jar under nitrogen at room temperature. Sufficient cocatalyst solution was added to the fibers, as described in example 2. No reaction was observed at room temperature after several minutes. But when the jar was placed in an oil bath at 80°C, polymerization with an exotherm above 150°C occurred within four minutes. Conversion of monomer to polymer was judged to be high based on the hardness of the reaction mixture upon cooling.

## Claims

1. Substrate having on its surface a coating selected from the group consisting of ring opening metathesis catalysts, ring opening metathesis cocatalysts, and mixtures thereof wherein said substrate is selected from the group consisting of glass fibers, aramid fibers, graphite fibers, and mixtures thereof.

2. Substrate of claim 1 wherein said metathesis catalyst is selected from the group consisting of halides, oxides, and oxyhalides of tungsten, molybdenum and tantalum; organoarsonium, organophosphonium, and organoammonium molybdates and tungstates, heteropolymolybdates, heteropolytungstates; and mixtures thereof.

3. Substrate of claim 1 wherein said metathesis cocatalyst is selected from the group consisting of organoaluminums, organic tin compounds, organic lead compounds, and mixtures thereof.

4. Substrate of claim 2 wherein said organoammonium, organoarsonium, and organophosphonium molybdates and tungstates are defined by the following formula:

$$[R_4Z]_{(2y-6x)}M_xO_y \qquad [R^1_3ZH]_{(2y-6x)}M_xO_y$$

where Z is nitrogen, arsenic or phosphorus; M is molybdenum or tungsten; O is oxygen; x and y represent the number of M and O atoms in the molecule based on the valence of +6 for molybdenum, +6 for tungsten and -2 for oxygen, and R and $R^1$ are individually selected from hydrogen, alkyl and alkylene groups of 1 to 20 carbon atoms, and cycloaliphatic groups each of 5 to 16 carbon atoms.

5. Reinforcing or filler material of claim 2 wherein said cocatalyst is air-insensitive and is selected from the group consisting of organic tin compounds, organic lead compounds, and mixtures thereof.

6. Reinforcing or filler material of claim 5 wherein said cocatalyst is selected from the group consisting of tetraalkyltins, triaklyltins hydrides, tetraalkylleads, and mixtures thereof.

7. Reinforcing or filler material of claim 6 wherein said cocatalyst is selected from the group consisting of tetrabutyltin, tributyltin hydride, tetraethyllead; and mixtures thereof.

8. Substrate of claim 3 wherein said organoaluminums are defined by the following formulas:

$$(R_n\ MO)_a\ R^1_bAlX_c \text{ and } (RO)_aR^1_bAlX_c$$

where M is selected from silicon, tin, germanium, lead, and aluminum, R and $R^1$ are individually selected from lower alkyl groups and phenyl groups, X is a halide selected from chloride and iodide, the sum of a, b and c is 3.0 with each parameter denoting the equivalents of the moieties in the cocatalyst.

9. Substrate of claim 1 wherein said catalyst is selected from tungsten hexachloride, tungsten oxytetrachloride, tungsten oxide, tridodecylammonium tungstate, methyltricaprylammonium tungstate, tri(tridecyl)ammonium tungstate, trioctylammonium tungstate, molybdenum pentachloride, molybdenum oxytrichloride, tridodecylammonium molybdate, methyltricaprylammonium molybdate, tri(tridecyl)ammonium molybdate, trioctylammonium molybdate, and tantalum pentachloride; wherein said cocatalyst is selected from diethylaluminum halides, propoxyethylaluminum halides, tetrabutyl tin hydride, triphenyltin hydride, trimethyltin hydride, triethyltin hydride, tripropyltin hydride, tetraethyltin, tetrabutyltin, and mixtures thereof.

10. Substrate of claim 2 wherein said cocatalyst is selected from diethylaluminum chloride, dioctylaluminum iodide, and mixtures thereof; said cocatalyst is used with a reaction rate moderator selected from ethers, esters, ketones, alcohols, and mixtures thereof, wherein molar ratio of said moderator to said cocatalyst is 1:1.5 to 1:5.

11. Method of preparing a substrate with a coating thereon selected from ring-opening metathesis catalysts, ring-opening metathesis cocatalysts, and mixtures thereof, comprising applying said coating onto said substrate, and drying said substrate and wherein said substrate is selected from the group consisting of glass fibers, aramid fibers, graphite fibers, and mixtures thereof.

12. Method of claim 11 wherein said metathesis catalyst is selected from the group consisting of halides, oxyhalides and oxides of tungsten, molybdenum and tantalum; organoarsonium, organophosphonium, and organoammonium molybdates and tungstates; heteropolymolybdates; heteropolytungstates; and mixtures thereof; and wherein said metathesis cocatalyst is selected from the group consisting essentially of organoaluminums, organic tin compounds, organic lead compounds, and mixtures thereof.

13. Method of claim 12 wherein said organoammonium, organoarsonium and organophosphonium molybdates and tungstates are defined by the following formula:

$$[R_4Z]_{(2y-6x)}\ M_xO_y \qquad [R^1_3ZH]_{(2y-6x)}\ M_xO_y$$

where Z is nitrogen, arsenic or phosphorus, M is molybdenum or tungsten, O is oxygen, x and y represent the number of M and O atoms in the molecule based on the valence of +6 for molybdenum, +6 for tungsten and -2 for oxygen, and R and $R^1$ are individually selected from hydrogen, alkyl and alkylene groups of 1 to 20 carbon atoms, and cycloaliphatic groups each of 5 to 16 carbon atoms.

**14.** Method of claim 12 comprising applying said coating from an aqueous sizing composition which comprises an organosilane, lubricant, antistatic agent, film forming resin, said coating, and water.

**15.** Method of claim 11 wherein said coating is dissolved in at least one norbornene-type monomer, and said norbornene-type monomer is selected from the group consisting essentially of norbornene, methylnorbornene, vinyl norbornene, ethylidenenorbornene, tetracyclododecene, methyltetracyclododecene, dicyclopentadiene, trimers of cyclopentadienes, tetramers of cyclopentadienes, and mixtures thereof.

**16.** Method of claim 11 wherein amount of said metathesis catalyst and/or cocatalyst is 0.1 to 0.7 weight part per 100 weight parts of said at least one norbornene-type monomer.

**17.** Method of claim 12 wherein said substrate is a glass fiber mat and said coating is applied to said mat by dipping said mat in an aqueous medium containing said coating.

**18.** Method of claim 12 wherein said organoaluminums are defined by the following formulas:

$$(R_n\ MO)_a\ R^1_bAlX_c \text{ and } (RO)_aR^1_bAlX_c$$

where M is selected from silicon, tin, germanium, lead, and aluminum, R and $R^1$ are individually selected from lower alkyl groups and phenyl groups, X is a halide selected from chloride and iodide, the sum of a, b and c is 3.0 with each parameter denoting the equivalents of the moieties in the cocatalyst; wherein said catalyst is selected from tungsten hexachloride, tungsten oxytetrachloride, tungsten oxide, tridodecylammonium tungstate, methyltricaprylammonium tungstate, tri(tridecyl)ammonium tungstate, trioctylammonium tungstate, molybdenum pentachloride, molybdenum oxytrichloride, tridodecylammonium molybdate, methyltricaprylammonium molybdate, tri(tridecyl) ammonium molybdate, trioctylammonium molybdate, and tantalum pentachloride.

**19.** Method of claim 12 wherein said cocatalyst is selected from diethylaluminum halides, propoxyethylaluminum halides, tetrabutyl tin hydride, triphenyltin hydride, trimethyltin hydride, triethyltin hydride, tripropyltin hydride, tetraethyltin, tetrabutyltin, and mixtures thereof.

**20.** Process of preparing a reinforced molded article comprising placing into a mold a substrate having thereon a component of a ring-opening metathesis catalyst system selected from the group consisting of a catalyst, cocatalyst, and mixtures thereof, introducing into the mold at least one norbornene-type monomer with the proviso that if the catalyst component or cocatalyst component is deposited on the substrate the monomer charge contains the complementary catalyst component or cocatalyst component to form the metathesis catalyst system allowing a ring-opening polymerization reaction by ring-opening of said at least one norbornene-type monomer to proceed in the mold, wherein said substrate is selected from the group consisting of glass fibers, aramid fibers, graphite fibers, and mixtures thereof.

**21.** The process of claim 20 wherein said substrate is coated with the metathesis catalyst component and said monomer contains the metathesis catalyst component.

**22.** The process of claim 20 wherein said substrate is coated with the metathesis cocatalyst component and said monomer contains the metathesis catalyst component.

**23.** Process of anyone of claims 20 to 22 wherein said catalyst is selected from halides, oxyhalides and oxides of tungsten, molybdenum and tantalum; organoarsonium, organophosphonium and organoammonium molybdates and tungstates; heteropolymolybdates; heteropolytungstates; and mixtures thereof; and wherein said cocatalyst is selected from organoaluminums, organotin compounds, organolead compounds, and mixtures thereof.

**24.** Process of claim 23 wherein said organoammonium, organoarsonium and organophosphonium molybdates and

tungstates are defined by the following formula:

$$[R_4Z]_{(2y-6x)}M_xO_y \qquad [R^1_3ZH]_{(2y-6x)}M_xO_y$$

where Z is nitrogen, arsenic or phosphorus, M is molybdenum or tungsten, O is oxygen, x and y represent the number of M and O atoms in the molecule based on the valence of +6 for molybdenum, +6 for tungsten and -2 for oxygen, and R and $R^1$ are individually selected from hydrogen, alkyl and alkylene groups of 1 to 20 carbon atoms, and cycloaliphatic groups each of 5 to 16 carbon atoms.

**25.** Process of claim 23 wherein said organoaluminums are defined by the following formulas:

$$(R_n\ MO)_a\ R^1_bALX_c \text{ and } (RO)_aR^1_bAlX_c$$

where M is selected from tin, lead, and aluminum, R and $R^1$ are individually selected from lower alkyl groups and phenyl groups, X is a halide selected from chloride and iodide, and the sum of a, b and c is 3.0 with each parameter denoting the equivalents of the moieties in the cocatalyst; wherein said organotin compounds are selected from air-insensitive tetralkyltins and air-insensitive trialkyltin hydrides; and said organic lead compounds are selected from the group consisting of air-insensitive tetraalkyllead compounds.

**26.** Process of claims 20 wherein said substrate is selected from the group consisting of glass fibers, aramid fibers, graphite fibers, and mixtures thereof; said process also including the step of introducing with said cocatalyst a halogen source selected from chlorosilanes.

**27.** Process of any one of claims 20, and 23 to 25 wherein amount of catalyst is 0.05 to 1 weight part per 100 weight parts of said at least one norbornene-type monomer; wherein molar ratio of said cocatalyst to said catalyst is 0.1 to 200; and wherein said amount of said halogen source is 0.1 to 2 millimoles per mole of said monomer(s).

**28.** Process of any one of claims 20 to 22 and 27 wherein said norbornene-type monomer is selected from substituted and unsubstituted 2-norbornenes, dicyclopentadienes, dihydrodicyclopentadienes, trimers of cyclopentadienes, tetramers of cyclopentadienes, tetracyclododecenes, and mixtures thereof.

**29.** Process of claim 28 wherein said norbornene-type monomer is selected from norbornene, methylnorbornene, vinyl norbornene, ethylidenenorbornene, tetracyclododecene, methyltetracyclododecene, dicyclopentadiene, trimer of cyclopentadiene, tetramer of cyclopentadiene, and mixtures thereof; and wherein said cocatalyst is selected from diethylaluminum halides, propoxyethylaluminum halides, tetrabutyl tin hydride, triphenyltin hydride, trimethyltin hydride, triethyltin hydride, tripropyltin hydride, tetraethyltin, tetrabutyltin, and mixtures thereof.

**30.** Process of claim 26 wherein said halogen source is tetrachlorosilane; wherein said catalyst is selected from the group consisting of tungsten hexachloride, tungsten oxytetrachloride, tungsten oxide, tridodecylammonium tungstate, methyltricaprylammonium tungstate, tri(tridecyl)ammonium tungstate, trioctylammonium tungstate, molybdenum pentachloride, molybdenum oxytrichloride, tridodecylammonium molybdate, methyltricaprylammonium molybdate, tri(tridecyl)ammonium molybdate, trioctylammonium molybdate, and tantalum pentachloride.

## Patentansprüche

**1.** Substrat mit einer Beschichtung auf seiner Oberfläche, die aus der Gruppe ausgewählt ist, die aus Ringöffnungsmetathesekatalysatoren, Ringöffnungsmetathesecokatalysatoren und Gemischen davon besteht, wobei das Substrat aus der Gruppe ausgewählt ist, die aus Glasfasern, Aramidfasern, Graphitfasern und Gemischen davon besteht.

**2.** Substrat gemäß Anspruch 1, wobei der Metathesekatalysator aus der Gruppe ausgewählt ist, die aus Halogeniden, Oxiden und Oxidhalogeniden von Wolfram, Molybdän und Tantal, Organoarsonium-, Organophosphonium- und Organoammoniummolybdaten und -wolframaten, Heteropolymolybdaten, Heteropolywolframaten und Gemischen davon besteht.

**3.** Substrat gemäß Anspruch 1, wobei der Metathesecokatalysator aus der Gruppe ausgewählt ist, die aus Organoaluminiumverbindungen, organischen Zinnverbindungen, organischen Bleiverbindungen und Gemischen davon besteht.

**4.** Substrat gemäß Anspruch 2, wobei die Organoammonium-, Organoarsonium- und Organophosphoniummolybdate und -wolframate durch die folgende Formel definiert sind:

$$[R_4Z]_{(2y-6x)}M_xO_y \qquad [R^1{}_3ZH]_{(2y-6x)}M_xO_y,$$

wobei Z Stickstoff, Arsen oder Phosphor ist, M Molybdän oder Wolfram ist, O Sauerstoff ist, x und y die Zahl der M- bzw. O-Atome in dem Molekül auf der Grundlage einer Wertigkeit von +6 für Molybdän, +6 für Wolfram und -2 für Sauerstoff darstellen und R und $R^1$ einzeln aus Wasserstoff, Alkyl- und Alkylengruppen mit 1 bis 20 Kohlenstoffatomen und cycloaliphatischen Gruppen mit jeweils 5 bis 16 Kohlenstoffatomen ausgewählt sind.

**5.** Verstärkungs- oder Füllstoff gemäß Anspruch 2, wobei der Cokatalysator luftunempfindlich ist und aus der Gruppe ausgewählt ist, die aus organischen Zinnverbindungen, organischen Bleiverbindungen und Gemischen davon besteht.

**6.** Verstärkungs- oder Füllstoff gemäß Anspruch 5, wobei der Cokatalysator aus der Gruppe ausgewählt ist, die aus Tetraalkylzinnverbindungen, Trialkylzinnhydriden, Tetraalkylbleiverbindungen und Gemischen davon besteht.

**7.** Verstärkungs- oder Füllstoff gemäß Anspruch 6, wobei der Cokatalysator aus der Gruppe ausgewählt ist, die aus Tetrabutylzinn, Tributylzinnhydrid, Tetraethylblei und Gemischen davon besteht.

**8.** Substrat gemäß Anspruch 3, wobei die Organoaluminiumverbindungen durch die folgenden Formeln definiert sind:

$$(R_nMO)_aR^1{}_bAlX_c \text{ und } (RO)_aR^1{}_bAlX_c,$$

wobei M aus Silicium, Zinn, Germanium, Blei und Aluminium ausgewählt ist, R und $R^1$ einzeln aus Niederalkylgruppen und Phenylgruppen ausgewählt sind, X ein Halogenid ist, das aus Chlorid und Iodid ausgewählt ist, die Summe von a, b und c 3,0 ist, wobei jeder Parameter die Äquivalente der Struktureinheiten in dem Cokatalysator angibt.

**9.** Substrat gemäß Anspruch 1, wobei der Katalysator aus Wolframhexachlorid, Wolframoxidtetrachlorid, Wolframoxid, Tridodecylammoniumwolframat, Methyltricaprylammoniumwolframat, Tri(tridecyl)ammoniumwolframat, Trioctylammoniumwolframat, Molybdänpentachlorid, Molybdänoxidtrichlorid, Tridodecylammoniummolybdat, Methyltricaprylammoniummolybdat, Tri(tridecyl)ammoniummolybdat, Trioctylammoniummolybdat und Tantalpentachlorid ausgewählt ist, wobei der Cokatalysator aus Diethylaluminiumhalogeniden, Propoxyethylaluminiumhalogeniden, Tetrabutylzinnhydrid, Triphenylzinnhydrid, Trimethylzinnhydrid, Triethylzinnhydrid, Tripropylzinnhydrid, Tetraethylzinn, Tetrabutylzinn und Gemischen davon ausgewählt ist.

**10.** Substrat gemäß Anspruch 2, wobei der Cokatalysator aus Diethylaluminiumchlorid, Dioctylaluminiumiodid und Gemischen davon ausgewählt ist und der Cokatalysator mit einem Reaktionsgeschwindigkeitsmoderator, der aus Ethern, Estern, Ketonen, Alkoholen und Gemischen davon ausgewählt ist, verwendet wird, wobei das Stoffmengenverhältnis des Moderators zu dem Cokatalysator 1:1,5 bis 1:5 beträgt.

**11.** Verfahren zur Herstellung eines Substrats mit einer Beschichtung darauf, die aus Ringöffnungsmetathesekatalysatoren, Ringöffnungsmetathesecokatalysatoren und Gemischen davon ausgewählt ist, umfassend das Auftragen der Beschichtung auf das Substrat und das Trocknen des Substrats, wobei das Substrat aus der Gruppe ausgewählt ist, die aus Glasfasern, Aramidfasern, Graphitfasern und Gemischen davon besteht.

**12.** Verfahren gemäß Anspruch 11, wobei der Metathesekatalysator aus der Gruppe ausgewählt ist, die aus Halogeniden, Oxidhalogeniden und Oxiden von Wolfram, Molybdän und Tantal, Organoarsonium-, Organophosphonium- und Organoammoniummolybdaten und -wolframaten, Heteropolymolybdaten, Heteropolywolframaten und Gemischen davon besteht, und wobei der Metathesecokatalysator aus der Gruppe ausgewählt ist, die im wesentlichen aus Organoaluminiumverbindungen, organischen Zinnverbindungen, organischen Bleiverbindungen und Gemischen davon besteht.

**13.** Verfahren gemäß Anspruch 12, wobei die Organoammonium-, Organoarsonium- und Organophosphoniummolybdate und -wolframate durch die folgende Formel definiert sind:

$$[R_4Z]_{(2y-6x)}M_xO_y \qquad [R^1{}_3ZH]_{(2y-6x)}M_xO_y,$$

wobei Z Stickstoff, Arsen oder Phosphor ist, M Molybdän oder Wolfram ist, O Sauerstoff ist, x und y die Zahl der M- bzw. O-Atome in dem Molekül auf der Grundlage einer Wertigkeit von +6 für Molybdän, +6 für Wolfram und -2 für Sauerstoff darstellen und R und $R^1$ einzeln aus Wasserstoff, Alkyl- und Alkylengruppen mit 1 bis 20 Kohlenstoffatomen und cycloaliphatischen Gruppen mit jeweils 5 bis 16 Kohlenstoffatomen ausgewählt sind.

**14.** Verfahren gemäß Anspruch 12, umfassend das Auftragen der Beschichtung aus einer wäßrigen Schlichtezusammensetzung, die ein Organosilan, ein Gleitmittel, ein antistatisches Mittel, ein filmbildendes Harz, die Beschichtung und Wasser umfaßt.

**15.** Verfahren gemäß Anspruch 11, wobei die Beschichtung in wenigstens einem Monomer des Norbornentyps gelöst ist und das Monomer des Norbornentyps aus der Gruppe ausgewählt ist, die im wesentlichen aus Norbornen, Methylnorbornen, Vinylnorbornen, Ethylidennorbornen, Tetracyclododecen, Methyltetracyclododecen, Dicyclopentadien, Trimeren von Cyclopentadienen, Tetrameren von Cyclopentadienen und Gemischen davon besteht.

**16.** Verfahren gemäß Anspruch 11, wobei die Menge des Metathesekatalysators und/oder -cokatalysators 0,1 bis 0,7 Gewichtsteile pro 100 Gewichtsteile des wenigstens einen Monomers des Norbornentyps beträgt.

**17.** Verfahren gemäß Anspruch 12, wobei das Substrat eine Glasfasermatte ist und die Beschichtung auf die Matte aufgetragen wird, indem man die Matte in ein wäßriges Medium eintaucht, das die Beschichtung enthält.

**18.** Verfahren gemäß Anspruch 12, wobei die Organoaluminiumverbindungen durch die folgenden Formeln definiert sind:

$$(R_nMO)_aR^1{}_bAlX_c \text{ und } (RO)_aR^1{}_bAlX_c,$$

wobei M aus Silicium, Zinn, Germanium, Blei und Aluminium ausgewählt ist, R und $R^1$ einzeln aus Niederalkylgruppen und Phenylgruppen ausgewählt sind, X ein Halogenid ist, das aus Chlorid und Iodid ausgewählt ist, die Summe von a, b und c 3,0 ist, wobei jeder Parameter die Äquivalente der Struktureinheiten in dem Cokatalysator angibt, wobei der Katalysator aus Wolframhexachlorid, Wolframoxidtetrachlorid, Wolframoxid, Tridodecylammoniumwolframat, Methyltricaprylammoniumwolframat, Tri (tridecyl) ammoniumwolframat, Trioctylammoniumwolframat, Molybdänpentachlorid, Molybdänoxidtrichlorid, Tridodecylammoniummolybdat, Methyltricaprylammoniummolybdat, Tri(tridecyl)ammoniummolybdat, Trioctylammoniummolybdat und Tantalpentachlorid ausgewählt ist.

**19.** Verfahren gemäß Anspruch 12, wobei der Cokatalysator aus Diethylaluminiumhalogeniden,Propoxyethylaluminiumhalogeniden, Tetrabutylzinnhydrid, Triphenylzinnhydrid, Trimethylzinnhydrid, Triethylzinnhydrid, Tripropylzinnhydrid, Tetraethylzinn, Tetrabutylzinn und Gemischen davon ausgewählt ist.

**20.** Verfahren zur Herstellung eines verstärkten Formteils, umfassend das Bringen eines Substrats, das eine Komponente eines Ringöffnungsmetathesekatalysatorsystems trägt, das aus der Gruppe ausgewählt ist, die aus einem Katalysator, einem Cokatalysator und Gemischen davon besteht, in eine Gießform, das Einführen wenigstens eines Monomers des Norbornentyps in die Form, mit der Maßgabe, daß die Monomer-charge, wenn die Katalysatorkomponente oder Cokatalysatorkomponente auf dem Substrat abgeschieden ist, die komplementäre Katalysatorkomponente bzw. Cokatalysatorkomponente enthält, so daß das Metathesekatalysatorsystem gebildet wird, was das Ablaufen einer Ringöffnungspolymerisationsreaktion durch Ringöffnung von wenigstens einem Monomer des Norbornentyps in der Form erlaubt, wobei das Substrat aus der Gruppe ausgewählt ist, die aus Glasfasern, Aramidfasern, Graphitfasern und Gemischen davon besteht.

**21.** Verfahren gemäß Anspruch 20, wobei das Substrat mit der Metathesekatalysatorkomponente beschichtet ist und das Monomer die Metathesekatalysatorkomponente enthält.

**22.** Verfahren gemäß Anspruch 20, wobei das Substrat mit der Metathesecokatalysatorkomponente beschichtet ist und das Monomer die Metathesekatalysatorkomponente enthält.

**23.** Verfahren gemäß einem der Ansprüche 20 bis 22, wobei der Katalysator aus Halogeniden, Oxidhalogeniden und Oxiden von Wolfram, Molybdän und Tantal, Organoarsonium-, Organophosphonium- und Organoammoniummolybdaten und -wolframaten, Heteropolymolybdaten, Heteropolywolframaten und Gemischen davon ausgewählt ist und der Cokatalysator aus Organoaluminiumverbindungen, Organozinnverbindungen, Organobleiverbindungen und Gemischen davon ausgewählt ist.

**24.** Verfahren gemäß Anspruch 23, wobei die Organoammonium-, Organoarsonium- und Organophosphoniummolybdate und -wolframate durch die folgende Formel definiert sind:

$$[R_4Z]_{(2y-6x)}M_xO_y] \qquad [R^1{}_3ZH]_{(2y-6x)}M_xO_y,$$

wobei Z Stickstoff, Arsen oder Phosphor ist, M Molybdän oder Wolfram ist, O Sauerstoff ist, x und y die Zahl der M- bzw. O-Atome in dem Molekül auf der Grundlage einer Wertigkeit von +6 für Molybdän, +6 für Wolfram und -2 für Sauerstoff darstellen und R und $R^1$ einzeln aus Wasserstoff, Alkyl- und Alkylengruppen mit 1 bis 20 Kohlenstoffatomen und cycloaliphatischen Gruppen mit jeweils 5 bis 16 Kohlenstoffatomen ausgewählt sind.

**25.** Verfahren gemäß Anspruch 23, wobei die Organoaluminiumverbindungen durch die folgenden Formeln definiert sind:

$$(R_nMO)_aR^1{}_bAlX_c \text{ und } (RO)_aR^1{}_bAlX_c,$$

wobei M aus Zinn, Blei und Aluminium ausgewählt ist, R und $R^1$ einzeln aus Niederalkylgruppen und Phenylgruppen ausgewählt sind, X ein Halogenid ist, das aus Chlorid und Iodid ausgewählt ist, die Summe von a, b und c 3,0 ist, wobei jeder Parameter die Äquivalente der Struktureinheiten in dem Cokatalysator angibt, wobei die Organozinnverbindungen aus luftunempfindlichen Tetraalkylzinnverbindungen und luftunempfindlichen Trialkylzinnhydriden ausgewählt sind und die organischen Bleiverbindungen aus der Gruppe ausgewählt sind, die aus luftunempfindlichen Tetraalkylbleiverbindungen besteht.

**26.** Verfahren gemäß Anspruch 20, wobei das Substrat aus der Gruppe ausgewählt ist, die aus Glasfasern, Aramidfasern, Graphitfasern und Gemischen davon besteht, und das Verfahren auch den Schritt des Einführens einer aus Chlorsilanen ausgewählten Halogenquelle mit dem Cokatalysator umfaßt.

**27.** Verfahren gemäß einem der Ansprüche 20 und 23 bis 25, wobei die Menge des Katalysators 0,05 bis 1 Gewichtsteil pro 100 Gewichtsteile des wenigstens einen Monomers des Norbornentyps beträgt, wobei das Stoffmengenverhältnis des Cokatalysators zu dem Katalysator 0,1 zu 200 beträgt und wobei die Menge der Halogenquelle 0,1 bis 2 Millimol pro Mol des Monomers bzw. der Monomere beträgt.

**28.** Verfahren gemäß einem der Ansprüche 20 bis 22 und 27, wobei das Monomer des Norbornentyps aus substituierten und unsubstituierten 2-Norbornenen, Dicyclopentadienen, Dihydrodicyclopentadienen, Trimeren von Cyclopentadienen, Tetrameren von Cyclopentadienen, Tetracyclododecenen und Gemischen davon ausgewählt ist.

**29.** Verfahren gemäß Anspruch 28, wobei das Monomer des Norbornentyps aus Norbornen, Methylnorbornen, Vinylnorbornen, Ethylidennorbornen, Tetracyclododecen, Methyltetracyclododecen, Dicyclopentadien, Trimer von Cyclopentadien, Tetramer von Cyclopentadien und Gemischen davon ausgewählt ist und wobei der Cokatalysator aus Diethylaluminiumhalogeniden, Propoxyethylaluminiumhalogeniden, Tetrabutylzinnhydrid, Triphenylzinnhydrid, Trimethylzinnhydrid, Triethylzinnhydrid, Tripropylzinnhydrid, Tetraethylzinn, Tetrabutylzinn und Gemischen davon ausgewählt ist.

**30.** Verfahren gemäß Anspruch 26, wobei es sich bei der Halogenquelle um Tetrachlorsilan handelt, wobei der Katalysator aus der Gruppe ausgewählt ist, die aus Wolframhexachlorid, Wolframoxidtetrachlorid, Wolframoxid, Tridodecylammoniumwolframat, Methyltricaprylammoniumwolframat, Tri(tridecyl) - ammoniumwolframat, Trioctylammoniumwolframat, Molybdänpentachlorid, Molybdänoxidtrichlorid, Tridodecylammoniummolybdat, Methyltricaprylammoniummolybdat, Tri(tridecyl) - ammoniummolybdat, Trioctylammoniummolybdat und Tantalpentachlorid besteht.

## Revendications

**1.** Substrat ayant sur sa surface un revêtement choisi parmi le groupe contenant Îles catalyseurs de métathèse à ouverture de cycle, les co-catalyseurs de métathèse à ouverture de cycle et mélanges, dans lequel ledit substrat est choisi parmi le groupe comprenant les fibres de verre, les fibres d'aramide, les fibres de graphite et leurs mélanges.

**2.** Substrat selon la revendication 1, dans lequel ledit catalyseur de métathèse est choisi parmi le groupe comprenant les halogénures, les oxydes et les oxyhalogènures de tungstène, et tantale ; les molybdates et tungstates, hétéropolymolybdates, hétéropolytungstates d'organoarsénium, d'organophosphonium et d'organoammonium et leurs mélanges.

**3.** Substrat selon la revendication 1, dans lequel ledit co-catalyseur de métathèse est choisi parmi le groupe comprenant les organo-aluminiums, les composés organiques d'étain, les composés organiques de plomb et leurs mélanges.

4. Substrat selon la revendication 2, dans lequel lesdits molybdates et tungstates d'organoammonium, d'organoarsénium et d'organophosphonium sont définis par la formule suivante :

$$[R_4Z]_{(2y-6x)} M_xO_y [R^1{}_3ZH]_{(2y-6x)} M_xO_y$$

dans laquelle Z est l'azote, l'arsenic ou le phosphore M est le molybdène ou le tungstène, O est l'oxygène ; x et y représentent le nombre d'atomes de M et O dans la molécule, calculé sur la de +6 pour le molybdène, +6 pour le tungstène et -2 pour l'oxygène, et R et $R^1$ sont choisis individuellement parmi l'hydrogène, des groupes alkyle et alkylène ayant de 1 à 20 atomes de carbone et des groupes cycloaliphatique ayant chacun de 5 à16 atomes de carbone.

5. Matériau de renforcement ou de charge selon la revendication 2, dans lequel ledit co-catalyseur est revendication 2, dans lequel ledit co-catalyseur est insensible à l'air et est choisi parmi le groupe comprenant les composés organiques d'étain, les composés organiques de plomb et leurs mélanges.

6. Matériau de renforcement ou de charge selon la revendication 5, dans lequel ledit co-catalyseur est choisi parmi le groupe comprenant les tétra-alkylétains, les hydrures de trialkylétains, les tétra-alkylplombs et leurs mélanges.

7. Matériau de renforcement ou de charge selon la revendication 6, dans lequel ledit co-catalyseur est choisi parmi le groupe comprenant le tétrabutylétain, l'hydrure de tributylétain, le tétraéthylplomb et leurs mélanges.

8. Substrat selon la revendication 3, dans lequel lesdits organo-aluminiums sont par les formules suivantes :

$$(R_n\ MO)_a\ R^1{}_bAlX_c \text{ et } (RO)_a\ R^1{}_bAlX_c$$

où M est choisi parmi le silicium, l'étain, le germanium, le plomb et l'aluminium, R et $R^1$ sont choisis individuellement parmi les groupes alkyle inférieurs et les groupes phényles, X est un halogénure choisi parmi un chlorure et un iodure, la somme de a, b et c est 3,0, chaque paramètre désignant les équivalents des fractions dans le co-catalyseur.

9. Substrat selon la revendication 1, dans lequel ledit catalyseur est choisi parmi l'hexachlorure de tungstène, l'oxytétrachlorure de tungstène, l'oxyde de tungstène, le tungstate de tridodécylammonium, le tungstate de méthyltricaprylammonium, le tungstate de tri(tridécyl)ammonium, le tungstate de trioctylammonium, le pentachlorure de molybdène, l'oxytrichlorure de molybdène, le molybdate de tridodécylammonium, le molybdate de méthyltricaprylammonium, le molybdate de tri(tridécyl)ammonium, le molybdate de trioctylammonium et le pentachlorure de tantale, dans lequel ledit co-catalyseur est choisi parmi les halogénures de diéthylaluminium, les halogénures de propoxyéthylaluminium, l'hydrure de tétrabutylétain, l'hydrure de triphénylétain, l'hydrure de triméthylétain, l'hydrure de triéthylétain, l'hydrure de tripropylétain, le tétraéthylétain, le tétrabutylétain et leurs mélanges.

10. Substrat selon la revendication 2, dans lequel ledit co-catalyseur est choisi le chlorure de diéthylaluminium, l'iodure de dioctylaluminium et leurs mélanges ; ledit co-catalyseur est utilisé avec un modérateur de vitesse de réaction choisi parmi les éthers, les esters, les cétones, les alcools et leurs mélanges, dans lequel le rapport molaire dudit modérateur audit co-catalyseur est de 1:1,5 à 1:5.

11. Procédé de préparation d'un substrat avec un révêtement sur celui-ci chosi parmi les catalyseurs de métathèse à ouverture de cycle, les co-catalyseurs de métathèse à ouverture de cycle, et leurs mélanges consistant à appliquer ledit revêtement sur ledit substrat et à sécher ledit substrat et dans lequel ledit substrat est choisi parmi le groupe comprenant les fibres de verre, les fibres d'aramide, les fibres de graphite et leurs mélanges.

12. Procédé selon la revendication 11, dans lequel ledit catalyseur de métathèse est choisi parmi le groupe comprenant les halogénures, les oxydes et les oxyhalogènures de tungstène, molybdène et tantale ; les molybdates et tungstates, hétéropolymolybdates, hétéropolytungstates d'organoarsénium, d'organophosphonium et d'organoammonium et leurs mélanges et dans lequel ledit co-catalyseur de métathèse est choisi parmi le groupe comprenant essentiellement les organo-aluminiums, les composés organiques d'étain, les composés organiques de plomb et leurs mélanges.

13. Procédé selon la revendication 12, dans lequel lesdits molybdates et tungstates d'organoammonium, d'organoarsénium et d'organophosphonium sont définis par la formule suivante :

$$[R_4Z]_{(2y-6x)}\ M_xO_y[R^1{}_3ZH]_{(2y-6x)}\ M_xO_y$$

dans laquelle Z est l'azote, l'arsenic ou le phosphore M est le molybdène ou le tungstène, O est l'oxygène ; x et y représentent le nombre d'atomes de M et O dans la molécule, calculé sur la valence de +6 pour le molybdène, +6 pour le tungstène et -2 pour l'oxygène, et R et $R^1$ sont choisis individuellement parmi l'hydrogène, des groupes alkyle et alkylène ayant de 1 à 20 atomes de carbone et des groupes cycloaliphatiques ayant chacun de 5 à16 atomes de carbone.

**14.** Procédé selon la revendication 12 consistant à appliquer ledit revêtement à partir d'une composition d'apprêt aqueuse qui comprend un organosilane, un lubrifiant, un agent antistatique, une résine filmogène, ledit revêtement et de l'eau.

**15.** Procédé selon la revendication 11, dans lequel ledit revêtement est dissous dans au moins un monomère de type norbornène et ledit monomère de type norbornène est choisi parmi le groupe se composant essentiellement de norbornène, de méthylnorbornène, de vinylnorbornène, d'éthylidènenorbornène, de tétracyclododécène, de méthyltétracyclododécène, de dicyclopentadiène, de trimères de cyclopentadiènes, de tétramères de cyclopentadiènes et de leurs mélanges.

**16.** Procédé selon la revendication 11, dans lequel la quantité dudit catalyseur et/ou co-catalyseur de métathèse est de 0,1 à 0,7 partie en poids pour 100 parties en poids dudit (ou desdits) monomère(s) de type norbornène.

**17.** Procédé selon la revendication 12, dans lequel ledit substrat est un mat de fibres de verre et ledit revêtement est appliqué audit mat en plongeant ledit mat dans un milieu aqueux contenant ledit revêtement.

**18.** Procédé selon la revendication 12, dans lequel lesdits organo-aluminiums sont définis par les formules suivantes :

$$(R_n\ MO)_a\ R^1{}_b AlX_c \text{ et } (RO)_a\ R^1{}_b\ AlX_c$$

où M est choisi parmi le silicium, l'étain, le germanium, le plomb et l'aluminium, R et $R^1$ sont choisis individuellement parmi les groupes alkyle inférieurs et les groupes phényles, X est un halogénure choisi parmi un chlorure et un iodure, la somme de a, b et c est 3,0, chaque paramètre désignant les équivalents des fractions dans le co-catalyseur, dans lequel ledit catalyseur est choisi parmi l'hexachlorure de tungstène, l'oxytétrachlorure de tungstène, l'oxyde de tungstène, le tungstate de tridodécylammonium, le tungstate de méthyltricaprylammonium, le tungstate de tri(tridécyl)ammonium, le tungstate de trioctylammonium, le pentachlorure de molybdène, l'oxytrichlorure de molybdène, le molybdate de tridodécylammonium, le molybdate de méthyltricaprylammonium, le molybdate de tri(tridécyl)ammonium, le molybdate de trioctylammonium et le pentachlorure de tantale.

**19.** Procédé selon la revendication 12, dans lequel ledit co-catalyseur est choisi parmi les halogénures de diéthylaluminium, les halogénures de propoxyéthylaluminium, l'hydrure de tétrabutylétain, l'hydrure de triphénylétain, l'hydrure de triméthylétain, l'hydrure de triéthylétain, l'hydrure de tripropylétain, le tétraéthylétain, le tétrabutylétain et leurs mélanges.

**20.** Procédé de préparation d'un article moulé renforcé consistant à placer dans un moule un substrat ayant sur celui-ci un composant d'un système de catalyseur de métathèse à ouverture de cycle choisi parmi le groupe comprenant un catalyseur, un co-cotalyseur et leurs mélanges, à introduire dans le moule au moins un monomère de type norbornène à condition que si le composant de catalyseur ou le composant de co-catalyseur est déposé sur le substrat, la charge de monomère renferme le composant de catalyseur ou le composant de co-catalyseur complémentaire pour former le système de catalyseur de métathèse permettant à une réaction de polymérisation à ouverture de cycle par ouverture de cycle dudit (ou desdits) monomère(s) de type norbornène d'être mise en oeuvre dans le moule, dans lequel ledit substrat est choisi parmi le groupe comprenant les fibres de verre, les fibres d'aramide, les fibres de graphite et leurs mélanges.

**21.** Le procédé selon la revendication 20, dans lequel ledit substrat est enrobé avec le composant de catalyseur de métathèse et ledit monomère renferme le composant de catalyseur de métathèse.

**22.** Le procédé selon la revendication 20, dans lequel ledit substrat est enrobé avec le composant de co-catalyseur de métathèse et ledit monomère renferme le composant de catalyseur de méthathèse.

**23.** Procédé selon l'une quelconque des revendications 20 à 22, dans lequel ledit catalyseur est choisi parmi les halogénures, les oxydes et les oxyhalogènures de tungstène, molybdène et tantale ; les molybdates et tungstates, hétéropolymolybdates, hétéropolytungstates d'organoarsénium, d'organophosphonium et d'organoammonium et leurs mélanges ; et dans lequel ledit co-catalyseur est choisi parmi les organo-aluminiums, les composés organiques d'étain, les composés organiques de plomb et leurs mélanges.

**24.** Procédé selon la revendication 23, dans lequel lesdits molybdates et tungstates d'organoammonium, d'organoarsénium et d'organophosphonium sont définis par la formule suivante :

$$[R_4Z]_{(2y-6x)}\ M_xO_y \qquad [R^1{}_3ZH]_{(2y-6x)}\ M_xO_y$$

dans laquelle Z est l'azote, l'arsenic ou le phosphore M est le molybdène ou le tungstène, O est l'oxygèné ; X et y représentent le nombre d'atomes de M et O dans la molécule, calculé sur la valence de +6 pour le molybdène, +6 pour le tungstène et -2 pour l'oxygène, et R et $R^1$ sont choisis individuellement parmi l'hydrogène, des groupes alkyle et alkylène ayant de 1 à 20 atomes de carbone et des groupes cycloaliphatiques ayant chacun de 5 à 16 atomes de carbone.

**25.** Procédé selon la revendication 23, dans lequel lesdits organo-aluminiums sont définis par les formules suivantes :

$$(R_n\ MO)_a\ R^1{}_b\ AlX_c \text{ et } (RO)_a\ R^1{}_b\ AlX_c$$

où M est choisi parmi l'étain, le plomb et l'aluminium, R et $R^1$ sont choisis individuellement parmi les groupes alkyle inférieurs et les groupes phényles, X est un halogénure choisi parmi un chlorure et un iodure et la somme de a, b, c est 3,0, chaque paramètre désignant les équivalents des fractions dans le co-catalyseurs ; dans lequel lesdits composés organiques d'étain sont choisis parmi les tétra-alkylétains insensibles à l'air et les hydrures de tri-alkylétain insensibles à l'air ; et lesdits composés de plomb organiques sont choisis parmi le groupe comprenant les composés de tétra-alkyl-plomb insensibles à l'air.

**26.** Procédé selon la revendication 20, dans lequel ledit substrat est choisi parmi le groupe comprenant les fibres de verre,les fibres d'aramide, les fibres de graphite et leurs mélanges; ledit procédé comprenant également l'étape d'introduction avec ledit co-catalyseur d'une source d'halogène choisie parmi les chlorosilanes.

**27.** Procédé selon l'une quelconque des revendications 20 et 23 à 25, dans lequel la quantité de catalyseur est de 0,05 à 1 partie en poids pour 100 parties en poids dudit (ou desdits) monomère(s) de type norbornène ; dans lequel le rapport molaire dudit co-catalyseur audit catalyseur est de 0,1 à 200 ; et dans lequel ladite quantité de ladite source d'halogéne est de 0,1 à 2 millimoles par mole dudit (ou desdits) monomère(s).

**28.** Procédé selon l'une quelconque des revendications 20 à 22 et 27, dans lequel ledit monomères de type norbornène est choisi parmi les 2-norbornènes substitués et non substitués, les dicyclopentadiènes, les dihydrodicyclopentadiènes, les trimères de cyclopentadiènes, les tétramères de cyclopentadiènes, les tétracyclododécènes et leurs mélanges.

**29.** Procédé selon la revendication 28, dans lequel ledit monomère de type norbornène est choisi parmi le norbornène, le méthylnorbornène, le vinylnorbornène, l'éthylidènenorbornène, le tétracyclododécène, le méthyltétracyclododécène, le dicyclopentadiène, un trimère de cyclopentadiène, un tétramère de cyclopentadiène et leurs mélanges et dans lequel ledit co-catalyseur est choisi parmi les halogénures de diéthylaluminium, les halogénures de propoxyéthylaluminium, l'hydrure de tétrabutylétain, l'hydrure de triphénylétain, l'hydrure de triméthylétain, l'hydrure de triéthylétain, l'hydrure de tripropylétain, le tétraéthylétain, le tétrabutylétain et leurs mélanges.

**30.** Procédé selon la revendication 26, dans lequel ladite source d'halogène est le tétrachlorosilane ; dans lequel ledit catalyseur est choisi parmi l'hexachlorure de tungstène, l'oxytétrachlorure de tungstène, l'oxyde de tungstène, le tungstate de tridodécylammonium, le tungstate de méthyltricaprylammonium, le tungstate de tri(tridécyl)ammonium, le tungstate de trioctylammonium, le pentachlorure de molybdène, l'oxytrichlorure de molybdène, le molybdate de tridodécylammonium, le molybdate de méthyltricaprylammonium, le molybdate de tri(tridécyl)ammonium, le molybdate de trioctylammonium et le pentachlorure de tantale.